# EUROPEAN PATENT APPLICATION

(11) **EP 4 617 771 A1**
(43) Date of publication of application: **17.09.2025**
(21) Application number: 23888604.8
(22) Date of filing: 01.11.2023
(51) Int. Cl.: G03B 19/00, G03B 9/08, G03B 15/00, G03B 37/04, H04N 23/55, H04N 23/698

(54) **OPTICAL DEVICE AND IMAGING DEVICE**

(30) Priority: 08.11.2022 JP 2022179009
(71) Applicant: Kyocera Corporation, Kyoto-shi, Kyoto 612-8501 (JP)
(72) Inventor: SUGAHARA Shun, Kyoto-shi, Kyoto 612-8501 (JP)
(74) Representative: Viering, Jentschura & Partner mbB Patent- und Rechtsanwälte
(86) International application number: PCT/JP2023/039529
(87) International publication number: WO 2024/101256

(57) **Abstract**

An optical device includes an optical system and an optical element. The optical system focuses incident first light and forms an image. The optical element guides second light to an image formation region of the first light by way of its multiple regions. The multiple regions are aligned in a direction parallel to the optical axis in the optical element. The multiple regions includes a region on the object side and a region on the image side. The image formation region of the second light coming by way of the region on the object side and the image formation region of the second light coming by way of the region on the image side overlap each other.

## Description

### CROSS-REFERENCE TO RELATED APPLICATIONS

This application claims the benefit of priority of Japanese Patent Application No. 2022-179009 filed on November 8, 2022, the entire contents of which are incorporated herein by reference.

### TECHNICAL FIELD

The present disclosure relates to an optical device and an imaging device.

### BACKGROUND OF INVENTION

An imaging optical system configured to form an image of an observation target has various physical characteristics such as focal length and the angle of view. When the focal length is long, an enlarged image of the observation target is formed, and thus, detailed optical information on a distant observation target, in other words, enlarged optical information can be obtained. The wider the angle of view, the wider the range within which optical information can be obtained from observation targets. However, the focal length and the angle of view are in a trade-off relationship. The longer the focal length, the narrower the angle of view, and the shorter the focal length, the wider the angle of view.

Hence, the focal length is adjusted depending on the situation so as to obtain desired optical information. For example, a zoom lens included in the imaging optical system is moved to adjust the focal length. Alternatively, the focal length is adjusted by switching between multiple single-focus lenses (see Patent Literatures 1 and 2).

### CITATION LIST

### PATENT LITERATURE

Patent Literature 1: Japanese Unexamined Patent Application Publication No. 11-311832
Patent Literature 2: Japanese Unexamined Patent Application Publication No. 2004-279556

### SUMMARY

In a first aspect, an optical device includes:
an optical system configured to focus incident first light and form an image; and
an optical element including multiple regions that are aligned in a direction parallel to an optical axis of the optical system and include a region on an object side and a region on an image side located closer to the image side than the region on the object side, the optical element being configured to guide second light whose principal ray is incident on the optical system at a different angle with respect to the optical axis of the optical system from an angle of a principal ray of the first light, to an image formation region of the first light by way of the multiple regions, and
an image formation region of the second light coming by way of the region on the object side and an image formation region of the second light coming by way of the region on the image side overlap each other.

In a second aspect, an imaging device includes:
an optical device including an optical system configured to focus incident first light and form an image, and an optical element including multiple regions that are aligned in a direction parallel to an optical axis of the optical system and include a region on an object side and a region on an image side located closer to the image side than the region on the object side, the optical element being configured to guide second light whose principal ray is incident on the optical system at a different angle with respect to the optical axis of the optical system from an angle of a principal ray of the first light, to an image formation region of the first light by way of the multiple regions, in which an image formation region of the second light coming by way of the region on the object side and an image formation region of the second light coming by way of the region on the image side overlap each other;
an imaging element having an imaging region overlapping the image formation region of the first light; and
a controller configured to separate an image corresponding to an image signal generated by image capturing of the imaging element into direct image components corresponding to object points in a direct viewing angle of the optical system, corresponding to the imaging region, and indirect image components corresponding to object points outside the direct viewing angle.

### BRIEF DESCRIPTION OF THE DRAWINGS

FIG. 1 is a configuration diagram illustrating a schematic configuration of an imaging device according to a first embodiment.
FIG. 2 is a diagram for explaining physical characteristics of an imaging element and an optical system in FIG. 1.
FIG. 3 is a conceptual diagram for explaining images reaching an imaging region in FIG. 1.
FIG. 4 is a diagram illustrating a path of a light beam, which extends until it reaches the imaging region, the light beam passing through the imaging optical system in FIG. 1 and then being directly incident on a first region.
FIG. 5 is a diagram illustrating a path of a light beam, which extends until it reaches the imaging region, the light beam passing through the imaging optical system in FIG. 1 and then being directly incident on a second region.
FIG. 6 is a conceptual diagram for explaining how a composite image reaching the imaging region in FIG. 1 is formed.
FIG. 7 is a conceptual diagram for explaining a subject light beam that reaches the imaging region in a state in which all of the regions of optical elements in FIG. 1 are in a non-emission state.
FIG. 8 is a conceptual diagram for explaining subject light beams that reach the imaging region in a state in which the first regions of the optical elements in FIG. 1 are in an emission state, and the second regions are in the non-emission state.
FIG. 9 is a conceptual diagram for explaining subject light beams that reach the imaging region in a state in which all of the regions of the optical elements in FIG. 1 are in the emission state.
FIG. 10 is a conceptual diagram for explaining a process of generating a restored image from a composite image, performed by a controller in FIG. 1.
FIG. 11 is a flowchart for explaining a first imaging process executed by the controller in FIG. 1.
FIG. 12 is a flowchart for explaining a second imaging process executed by the controller in FIG. 1.
FIG. 13 is a configuration diagram illustrating a schematic configuration of an imaging device according to a second embodiment.
FIG. 14 is a flowchart for explaining a second imaging process executed by a controller in FIG. 13.

### DESCRIPTION OF EMBODIMENTS

Hereinafter, embodiments of the present disclosure will be described with reference to the drawings. As for the components in the following drawings, the same components are denoted by the same symbols.

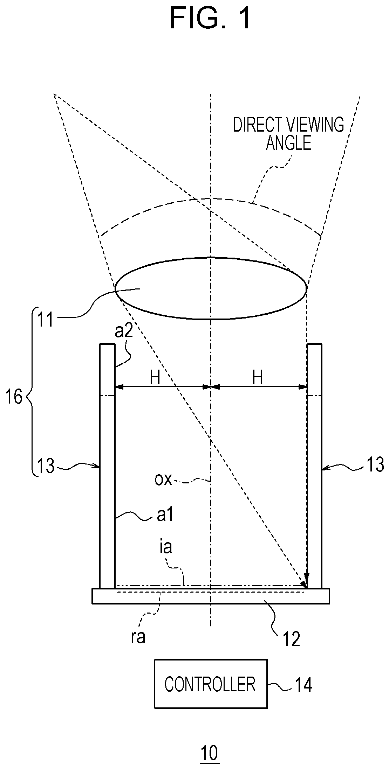

As illustrated in FIG. 1, an imaging device 10 including an optical device 16 according to a first embodiment of the present disclosure includes the optical device 16, an imaging element 12, and a controller 14. The optical device 16 includes an imaging optical system (an optical system) 11 and optical elements 13.

The imaging optical system 11 focuses an incident subject light beam and forms an image. The imaging optical system 11 focuses incident first light and forms an image in an image formation region ia. The first light may be light emitted by object points located within the angle of view of the imaging optical system 11 alone. The image formation region ia may be, for example, an imaginary plane or curved surface in three-dimensional space, the center of which intersects the optical axis ox of the imaging optical system 11. Hereinafter, the angle of view of the imaging optical system 11 alone, in other words, the angle of view of the imaging optical system 11 without the optical elements 13, is referred to as the direct viewing angle. The imaging optical system 11 is composed of an optical element that focuses light beams emitted from object points at different positions at different image points to form an image with the optical element alone, in other words, without the optical elements 13. The optical element composing the imaging optical system 11 is, for example, a lens, a mirror, an aperture, or the like.

The imaging optical system 11 need not be image-space telecentric. In other words, the angle of the principal ray of any light beam passing through the imaging optical system 11 with respect to the optical axis may be larger than 0°. However, the imaging optical system 11 may be image-space telecentric.

The optical elements 13 guide second light incident on the imaging optical system 11 to the image formation region ia. As for the second light, the angle between the optical axis ox of the imaging optical system 11 and its principal ray incident on the imaging optical system 11 differs from that of the first light. The second light may be light emitted from object points located outside the angle of view of the imaging optical system 11, in other words, outside the direct viewing angle. Hence, the angle between the principal ray of the second light and the optical axis ox may be larger than the angle between the principal ray of the first light and the optical axis ox. The principal ray may be any of the light ray passing through the center of the aperture stop of the imaging optical system 15, the light ray passing through the center of the entrance pupil of the imaging optical system 15, or the light ray at the center of the light beam emitted from a certain object point and incident on the imaging optical system 15. The optical elements 13 may focus the second light having passed through the imaging optical system 11 and form an image in the image formation region ia.

Each optical element 13 includes multiple regions aligned in the optical axis direction of the imaging optical system 11 in the imaging device 10. Each optical element 13 includes, for example, two regions: a first region (a region on the image side) a1 and a second region (a region on the object side) a2. The first region a1 may be located closer to the image side than the second region a2. The optical elements 13 guide the second light mentioned above to the image formation region ia by way of the multiple regions, in other words, by causing the second light to be incident on and exit from some of the multiple regions. The optical elements 13, as described later, guide the second light incident on each of the multiple regions to the image formation region ia. In the first embodiment, the optical elements 13, as described later, cause the second light incident on the regions located on the object side, out of the multiple regions, to reach the image formation region ia by way of the regions located closer to the image side than those regions.

Each optical element 13 may be a mirror configured to reflect at least part of the second light incident on the imaging optical system 11 to guide it to the image formation region ia. The reflection surface of the mirror may be parallel to one side of a rectangular imaging region ra. In the first embodiment, the reflection surface of the mirror may be also parallel to the optical axis ox of the imaging optical system 11. However, the reflection surface of the mirror is not limited to being parallel to the optical axis ox.

When viewed from the optical axis ox direction of the imaging optical system 11, the optical elements 13 may be located outside the exit pupil of the imaging optical system 11. More specifically, the optical elements 13 may be located such that the reflection surfaces are located outside the exit pupil of the imaging optical system 11. Alternatively, the mirrors may be located inside the exit pupil when viewed in the optical axis ox direction. In particular, in a configuration in which the imaging region ra of the imaging element 12, described later, is smaller than the diameter of the pupil, the mirrors may be located inside the exit pupil.

In the first embodiment, the optical elements 13 composed of mirrors include multiple plane mirrors. At least one set of two plane mirrors out of the multiple plane mirrors may be located such that their reflection surfaces face and are parallel to each other. Each plane mirror may be in close contact with an outer edge of the imaging region ra of the imaging element 12 in the normal direction of the plane mirror. Alternatively, a configuration in which each plane mirror is not in close contact with an outer edge of the imaging region ra in the normal direction of the plane mirror, and a gap is present is possible.

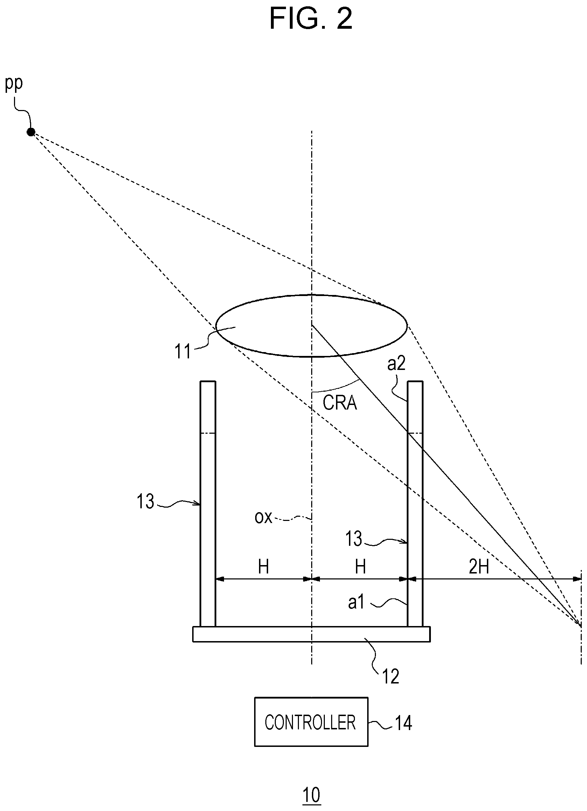

As illustrated in FIG. 2, the distance H between the optical axis ox and each of the two plane mirrors, the reflection surface of which are parallel to each other, may be equal. The two plane mirrors parallel to each other, the imaging optical system 11, and the imaging element 12 may be designed and arranged such that CRA ≤ tan⁻¹(2H/B) is satisfied, where CRA is the angle between the optical axis ox and the principal ray, determined by the imaging optical system 11, of the second light emitted from an object point pp at an angle 3/2 times the direct viewing angle from the optical axis ox, and B is the backfocus of the imaging optical system 11.

In the imaging device 10, the position of the intersection point of the inner surface of an optical element 13 and the principal ray, determined by the imaging optical system 11, of the second light emitted from the object point pp and focusing and forming an image at a position 2H or 3H away from the optical axis ox when the optical element 13 is not present may be the boundary position between the first region a1 and the second region a2 in the optical axis ox direction.

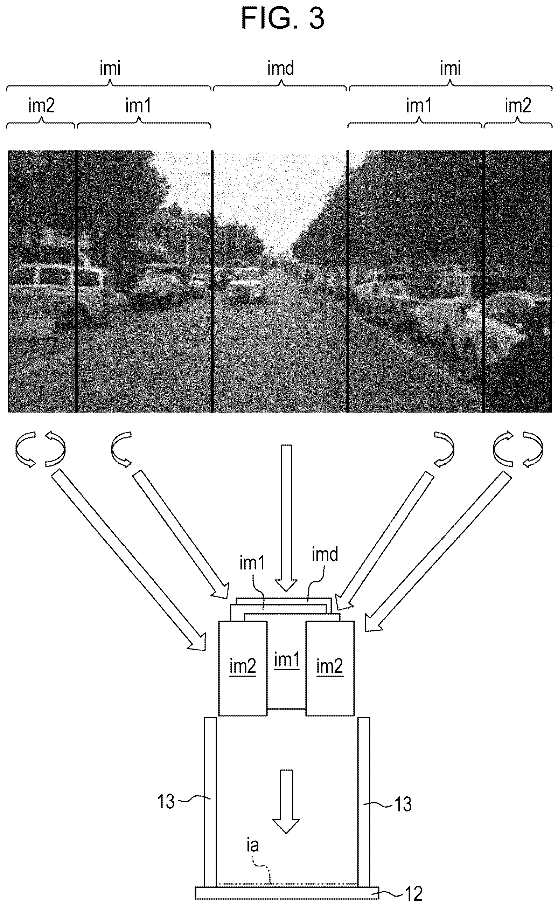

As described later, with the combination of the location of the imaging element 12 in the imaging device 10 and the configuration as described above, the direct image components imd corresponding to the object points within the direct viewing angle, in other words, the object points that emit first light, reach the image formation region ia without the intervention of the optical elements 13, as illustrated in FIG. 3. The direct image components imd corresponding to the object points within the direct viewing angle, more specifically, correspond to the images of subjects located within the direct viewing angle. In addition, indirect image components imi corresponding to object points outside the direct viewing angle, in other words, object points that emit second light reach the image formation region ia, being inverted at least once by the intervention of the optical elements 13. The indirect image components imi corresponding to object point outside the direct viewing angle, more specifically, correspond to the images of subjects located outside the direct viewing angle.

The indirect image components imi include multiple sets of image components. For example, the indirect image components imi include first image components im1 and second image components im2. The object points corresponding to each of the multiple sets of image components correspond to the region that the second light passing through the imaging optical system 11 are directly incident on. For example, the first image components im1 are the image components of the second light that passes through the imaging optical system 11 and is then directly incident on the first regions a1 of the optical elements 13. The second image components im2 are the image components of the second light that passes through the imaging optical system 11 and is then directly incident on the second regions a2 of the optical elements 13.

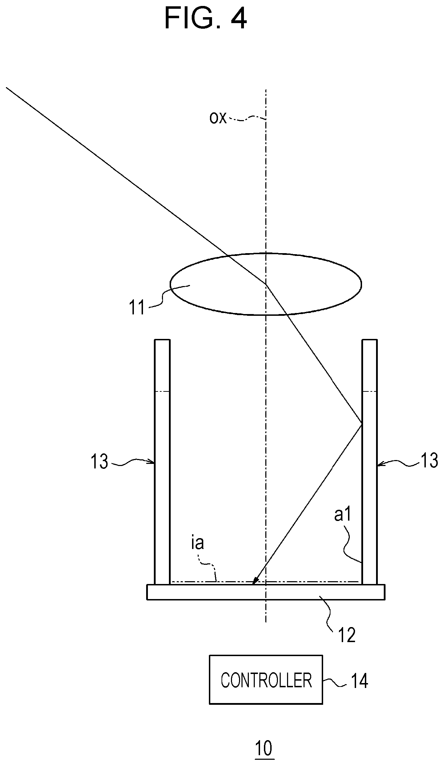

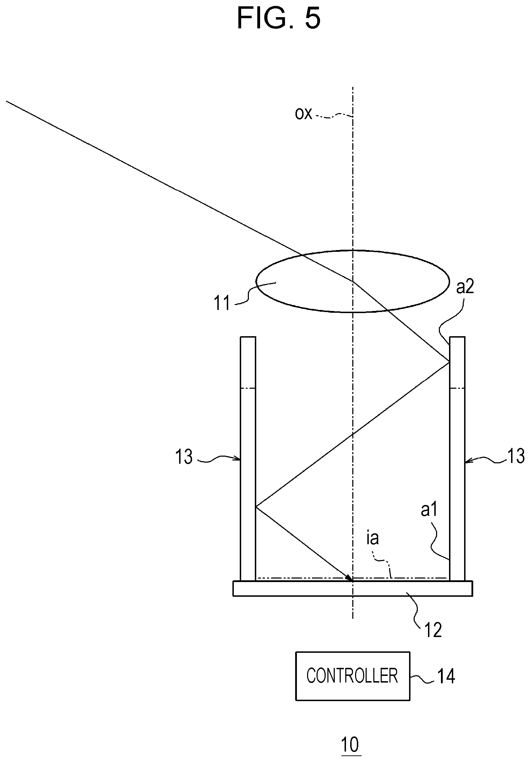

In the configuration of the optical elements 13 composed of two plane mirrors as described above, the second light incident on a first region a1 located closest to the image side, out of the multiple regions, reaches the image formation region ia by being reflected on the first region a1 as illustrated in FIG. 4. As illustrated in FIG. 5, the second light incident on a second region a2 located on the object side, out of the multiple regions, reaches the image formation region ia by being reflected on the second region a2 and traveling by way of a first region a1 closer to the image side than the second region a2, more specifically, being reflected on the first region a1. Hence, the image formation region ia of the second light that travels by way of the second regions a2 and the image formation region ia of the second light that travels by way of the first regions a1 overlap each other.

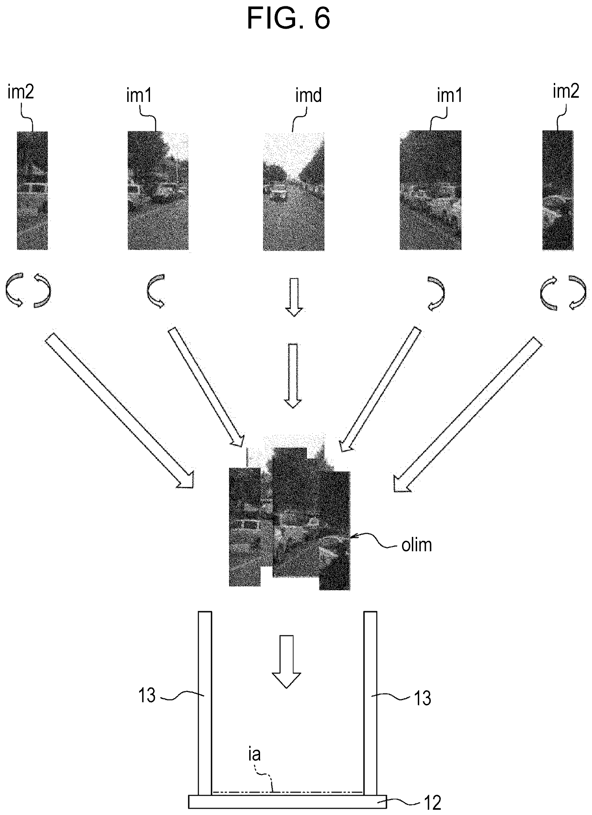

With the configuration described above, as illustrated in FIG. 6, the direct image components imd, the first image components im1 inverted once, and the second image components im2 inverted twice, in a configuration in which the optical elements 13 are mirrors, overlap one another in the image formation region ia. In the first embodiment, the configuration described above enables the optical elements 13 to guide the second light incident on the multiple regions (the first regions a1 and the second regions a2) to the same position in the image formation region ia. Thus, as described later, the imaging element 12 located in the imaging device 10 captures a composite image olim including the direct image components imd, the inverted first image components im1, and the second image components im2.

In at least the second regions a2 located closest to the object side out of the multiple regions of the optical elements 13, switching may be possible between emission and non-emission of the second light traveling toward these regions. For each of the multiple regions of the optical elements 13, switching may be possible between emission and non-emission of the second light traveling toward the region. For example, switching elements each capable of opening and closing the corresponding region may be provided on the surfaces of the optical elements 13 on the optical axis ox sides. The switching elements are, for example, shutters. Opening and closing a shutter switches between the incidence and shading of the second light to the region facing the shutter. Switching between the incidence and shading of the second light to the region may switch between the emission and non-emission of the second light traveling toward the region. The shutters may be mechanically operated mechanisms or may have a configuration including liquid crystal. Alternatively, the shutters may be, for example, mechanisms capable of switching between emission and non-emission by changing the reflection directions, such as MEMS mirrors.

The imaging element 12 captures an image formed within the imaging region ra. The imaging element 12 may be located in the imaging device 10 such that the image formation region ia of the optical device 21 overlaps the imaging region ra. Hence, the imaging region ra of the imaging element 12 may correspond to the direct viewing angle. The direct viewing angle may be the angle of view corresponding to the range of the object points the images of which are formed within the imaging region ra without the intervention of the optical elements 13. At least part of the light beams of the first light incident on the imaging optical system 11 from the direct viewing angle of the imaging optical system 11 may focus and form images in the imaging region ra. In addition, at least part of the light beams of the second light incident on the imaging optical system 11 from the outside of the direct viewing angle of the imaging optical system 11 and traveling by way of the optical elements 13 may focus and form images in the imaging region ra.

The imaging element 12 may be capable of capturing images of visible light and invisible light such as infrared light and ultraviolet light. The imaging element 12 is, for example, a charge coupled device (CCD) image sensor, a complementary metal-oxide-semiconductor (CMOS) image sensor, or the like. The imaging element 12 may be a color image sensor. In other words, the plurality of pixels arranged in the imaging region ra of the imaging element 12 may be covered with, for example, RGB color filters such that these filters are distributed uniformly in the imaging region ra. The imaging element 12 generates image signals corresponding to images received by image capturing. The imaging element 12 may generate image signals at a specified frame rate such as 30 fps.

In the imaging element 12, the outer edges of the imaging region ra on the sides where the optical elements 13 are located may be located outside the outer edge of the exit pupil of the imaging optical system 11. The expression "outside the outer edge of the exit pupil" denotes "outside with respect to the optical axis ox of the imaging optical system 11". As described earlier, the imaging region ra may be rectangular.

The controller 14 includes at least one processor, at least one dedicated circuit, or a combination of these. The processor is a general purpose processor such as a central processing unit (CPU) or a graphics processing unit (GPU) or a dedicated processor specialized for a specific process. The dedicated circuit may be, for example, a field-programmable gate array (FPGA), an application specific integrated circuit (ASIC), or the like. The controller 14 may perform image processing on the image signals obtained from the imaging element 12.

Whether the imaging device 10 has a configuration without switching elements or a configuration with switching elements, the controller 14 may control the imaging element 12 such that the imaging element 12 captures a composite image olim including all of the direct image components imd and indirect image components imi which overlap one another.

In a configuration in which the imaging device 10 includes switching elements, the controller 14 may control the switching elements and the imaging element 12 such that they perform image capturing while changing specified regions in a state in which all of the regions on the imaging element 12 side including the specified regions are switched to an emission allowed state, and the regions other than all of the regions mentioned above are switched to a non-emission state. In addition, in a configuration in which the imaging device 10 includes switching elements, the controller 14 may control the switching elements and the imaging element 12 such that they perform image capturing in a state in which all of the regions are switched to the non-emission state.

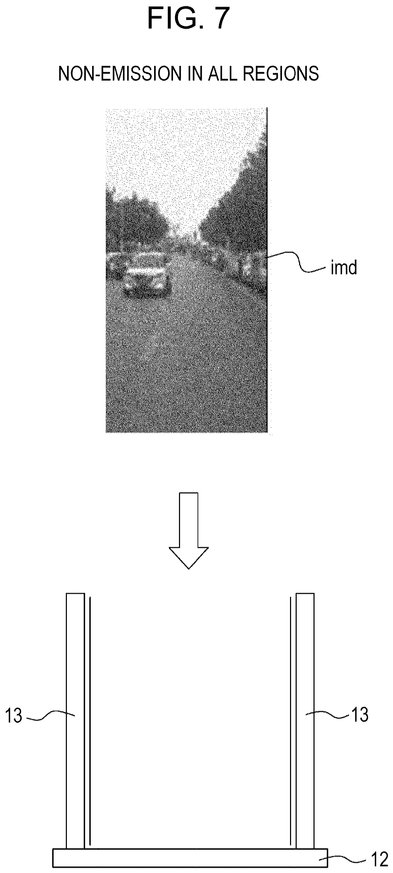

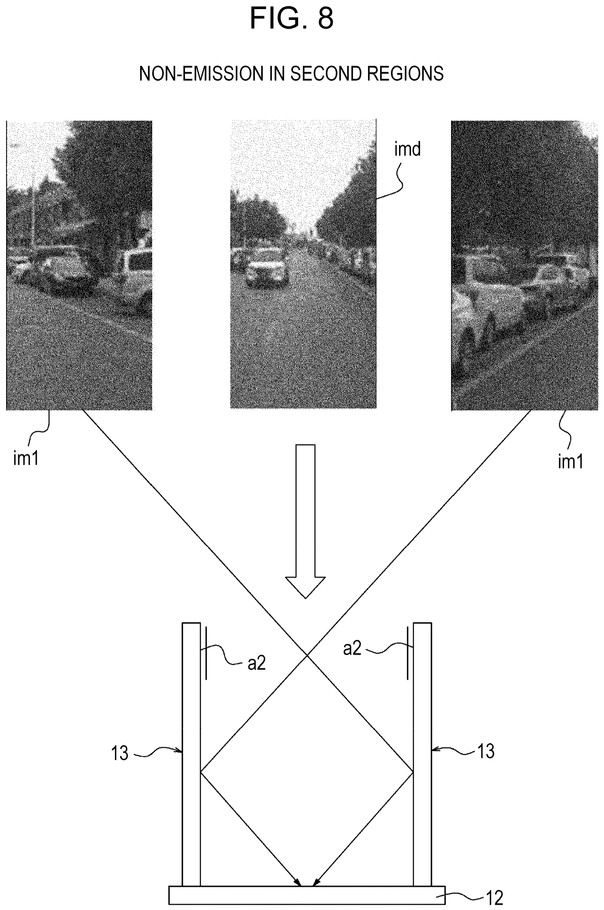

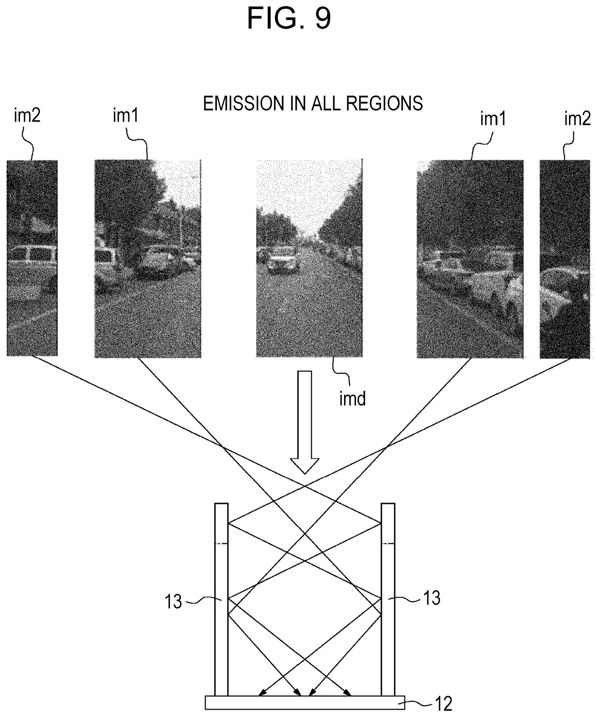

For example, to capture an image for one frame, the controller 14 may control the switching elements and the imaging element 12 such that they perform sequentially image capturing only for the direct image components imd, image capturing for the composite image of the direct image components imd and the first image components im1, and image capturing for the composite image of the direct image components imd, the first image components im1, and the second image components im2. As illustrated in FIG. 7, when image capturing is performed in a state in which all of the regions of the optical elements 13 are switched to the non-emission state, an image of only the direct image components imd is captured. As illustrated in FIG. 8, when image capturing is performed in a state in which only the second regions a2 of the optical elements 13 are switched to the non-emission state, a composite image of the direct image components imd and the first image components im1 is captured. As illustrated in FIG. 9, when image capturing is performed in a state in which all of the regions of the optical elements 13 are switched to the emission state, a composite image olim of the direct image components imd, the first image components im1, and the second image components im2 is captured.

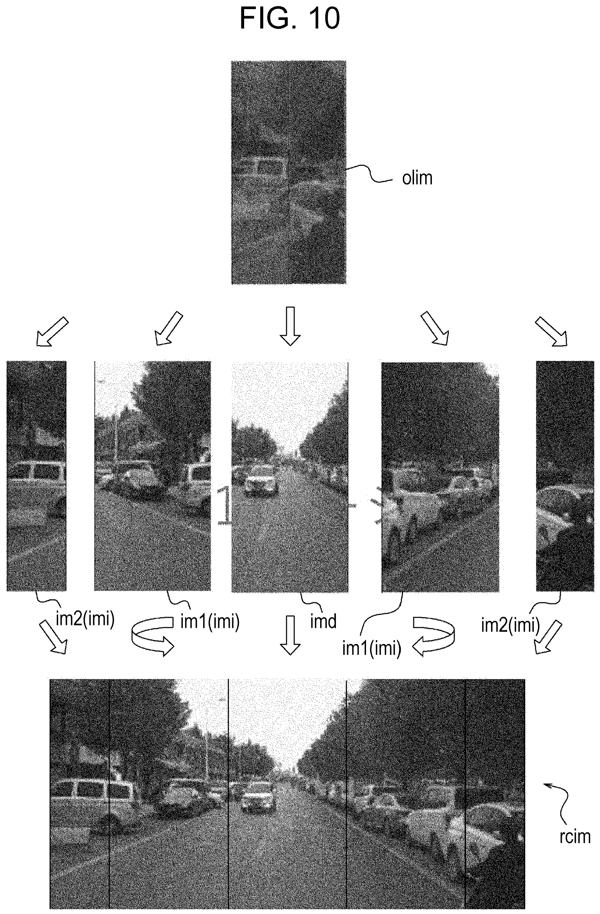

As illustrated in FIG. 10, the controller 14 may perform image processing to separate the composite image olim corresponding to the image signal into the direct image components imd and the indirect image components imi. The indirect image components imi may include multiple sets of image components corresponding to the respective regions. Specifically, the indirect image components imi may include the first image components im1 and the second image components im2 corresponding to the first regions a1 and the second regions a2, respectively. The controller 14 applies, for example, an image processing method such as an independent component analysis, a wavelet method, or an image separation model to separate the composite image olim. The image separation model is, for example, a model built in advance by creating composite images formed by overlaying multiple images and causing the model to learn that the multiple images are the correct answer for each composite image. The image separation model may be a model employing pix-to-pix that causes a generator configured to generate images as with an encoder-decoder model and a discriminator configured to determine whether a generated image is a false image to compete against each other and that generates paired images reflecting the relationship. The controller 14 may combine the direct image components imd and indirect image components imi obtained by the separation to generate a restored image rcim.

When performing image capturing while changing specified regions in a state in which all of the regions on the imaging element 12 side including the specified regions are switched to the emission allowed state, and the regions other than all of the regions mentioned above are switched to the non-emission state, the controller 14 may generate a restored image rcim by a method different from the method mentioned above. For example, the controller 14 generates image components of an image formed by the light beams incident on the regions closest to the object side by subtracting an image captured in a state in which the regions closest to the object side are in the non-emission state from an image captured in a state in which all of the regions of the optical elements 13 are in the emission state, in other words, the composite image olim of the direct image components imd and all of the indirect image components imi. For example, in a configuration in which the multiple regions are composed of the first regions a1 and the second regions a2, the controller 14 generates the second image components im2 by subtracting the composite image of the direct image components imd and the first image components im1 from the composite image olim of the direct image components imd, the first image components im1, and the second image components im2. In a configuration in which the generated second image components im2 are a composite image including the image components reflected on two mirrors facing each other, the controller 14 may apply a separation process mentioned above to separate the two sets of image components. The controller 14 may generate the first image components im1 by a method similar to the one for the second image components im2. The controller 14 may combine the direct image components imd and the indirect image components imi obtained by the separation to generate a restored image rcim.

The controller 14 may use the restored image rcim to measure the distance to a subject captured around the imaging device 10. The controller 14 uses the restored image rcim to perform distance measurement, for example, in accordance with depth-from-defocus (DFD). The controller 14 may perform distance measurement by using the restored image rcim in accordance with a motion parallax method (SLAM: simultaneous localization and mapping, motion stereo), a separation model based on deep learning, a foot-distance measurement method, or the like. In the foot-distance measurement method, three-dimensional coordinates are calculated by using the coordinates of images on the assumption that the lower end of a subject image is positioned on the ground surface.

The controller 14 may generate a distance image by using the distance corresponding to each address in the restored image rcim. In the distance image, the pixel value of each pixel corresponds to the distance. The controller 14 may send the distance image to external equipment.

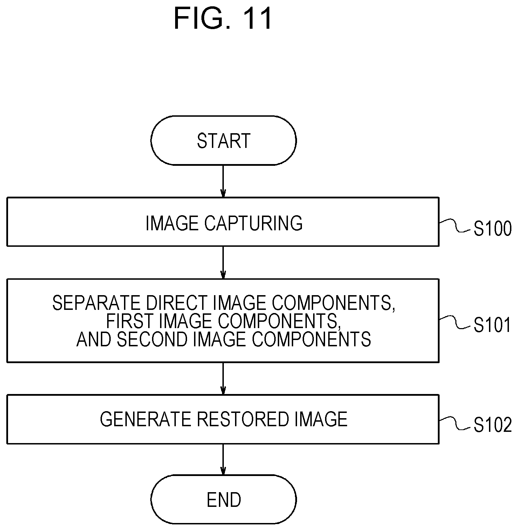

A first imaging process executed by the controller 14 in the first embodiment will be described with reference to the flowchart in FIG. 11. The first imaging process is executed by an imaging device 10 without switching elements or an imaging device 10 that includes switching elements and performs image capturing in a state in which all of the regions are in the emission allowed state. For example, the first imaging process starts periodically.

In step S100, the controller 14 causes the imaging element 12 to capture an image of subject light beams focused in the imaging region ra. After the image capturing, the process proceeds to step S101.

In step S101, the controller 14 separates the image captured in step S100 into the direct image components imd, the first image components im1, and the second image components im2. After the separation, the process proceeds to step S102.

In step S102, the controller 14 combines the direct image components imd, the first image components im1, and the second image components im2 obtained by the separation in step S101 to generate a restored image rcim. The controller 14 also stores the restored image rcim into memory provided in the imaging device 10. After the generation, the first imaging process ends.

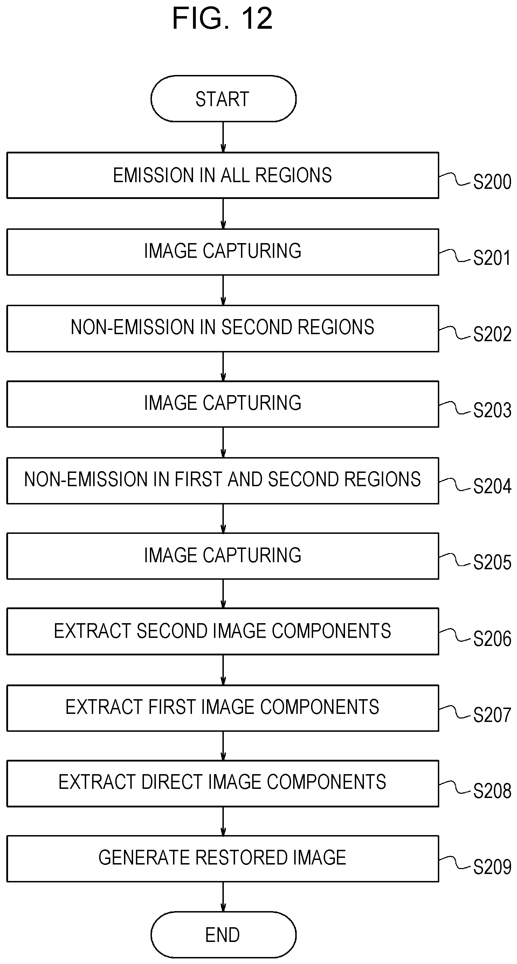

A second imaging process executed by the controller 14 in the first embodiment will be described with reference to the flowchart in FIG. 12. In the second imaging process, an imaging device 10 including switching elements performs image capturing to generate an image for one frame by switching the non-emission state for the multiple regions. For example, the second imaging process starts periodically.

In step S200, the controller 14 controls the switching elements such that all of the regions of the optical elements 13 are in the emission allowed state. After the control, the process proceeds to step S201.

In step S201, the controller 14 causes the imaging element 12 to capture an image. After the image capturing, the process proceeds to step S202.

In step S202, the controller 14 controls the switching elements such that the second regions a2 of the optical elements 13 are in the non-emission state. After the control, the process proceeds to step S203.

In step S203, the controller 14 causes the imaging element 12 to capture an image. After the image capturing, the process proceeds to step S204.

In step S204, the controller 14 controls the switching elements such that the first regions a1 and the second regions a2 of the optical elements 13 are in the non-emission state. After the control, the process proceeds to step S205.

In step S205, the controller 14 causes the imaging element 12 to capture an image. After the image capturing, the process proceeds to step S206.

In step S206, the controller 14 extracts the second image components im2 by subtracting the image captured in step S203 from the image captured in step S201. After the extraction, the process proceeds to step S207.

In step S207, the controller 14 extracts the first image components im1 by subtracting the image captured in step S205 from the image captured in step S203. After the extraction, the process proceeds to step S208.

In step S208, the controller 14 extracts the direct image components imd by subtracting the first image components im1 extracted in step S207 from the image captured in step S203. After the extraction, the process proceeds to step S209. Note that in a configuration in which the image captured in step S205 is recognized as the direct image components imd, step S208 may be omitted.

In step S209, the controller 14 generates the restored image rcim by using the second image components im2 extracted in step S207, the first image components im1 extracted in step S208, and the direct image components imd extracted in step S208. The controller 14 also stores the restored image rcim into memory provided in the imaging device 10. After storing the image, the second imaging process ends.

The optical device 16 of the first embodiment with the configuration described above includes the imaging optical system 11 that focuses the first light and forms an image in the image formation region ia and the optical elements 13 each including the multiple regions a1 and a2 aligned in the optical axis ox direction of the imaging optical system 11 and configured to guide the second light whose principal ray is incident on the imaging optical system 11 at a different angle with respect to the optical axis ox of the imaging optical system 11 from that of the first light, to the image formation region ia by way of the multiple regions a1 and a2. The optical elements 13 guide the second light incident on each of the multiple regions a1 and a2 to the same position in the image formation region ia. With the configuration mentioned above, although the optical device 16 employs an imaging optical system 11 with a relatively long focal length, the optical device 16 is capable of guiding, to the image formation region ia, an image containing optical information in an angle range wider than the angle of view corresponding to the focal length. Thus, the optical device 16 is capable of generating enlarged optical information in a wide range.

In the optical device 16 of the first embodiment, the second light incident on the regions a2 on the object side, out of the multiple regions a1 and a2, reaches the image formation region ia by way of the regions a1 closer to the image side than the regions a2. With the configuration described above, the optical device 16 is capable of guiding the second light incident on the regions a2 on the object side to the image formation region ia while mitigating the decrease in the amount of light caused by partial vignetting of the light beams of the second light. Thus, the optical device 16 is capable of mitigating the decrease in the luminance of the image components im2 corresponding to the regions a1 on the object side.

In the optical device 16 of the first embodiment, switching is possible between the emission and non-emission of the second light traveling toward at least the regions a2 located closest to the object side, out of the multiple regions a1 and a2. In the optical device 16 with the configuration described above, the image components im2 corresponding to the regions a2 can be extracted with high accuracy by calculating the difference between an image captured in the emission state of the regions a2 and an image captured in the non-emission state of the regions a2.

In addition, in the optical device 16 of the first embodiment, for each region of the multiple regions a1 and a2, switching is possible between the emission and non-emission of the second light traveling toward each region a1 or a2. The configuration described above enables the optical device 16 to extract image components with high extraction accuracy.

The imaging device 10 of the first embodiment includes the controller 14 configured to separate the image corresponding to the image signal into the direct image components imd corresponding to the object points within the direct viewing angle and the indirect image components imi corresponding to object points outside the direct viewing angle. This configuration enables the imaging device 10 to generate an image obtained by canceling the overlap in the composite image olim including multiple sets of overlapping image components.

In the imaging device 10 of the first embodiment, the optical elements 13 are mirrors configured to reflect at least part of the second light incident on the imaging optical system 11 and guide it to the image formation region ia, and the reflection surface of each mirror is parallel to the optical axis ox and one side of the rectangular imaging region ra of the imaging element 12. In the imaging device 10 with this configuration, the number of directions in which the image reaching the imaging region ra by way of the mirrors is distorted is smaller than or equal to one. Thus, the load of image processing to remove the distortion in the light components reflected by the mirrors, included in the captured image can be low in the imaging device 10, so that the imaging device 10 can provide an improved reproducibility of the reflected light components.

In the imaging device 10 of the first embodiment, the mirrors include a plurality of plane mirrors, and at least one set of two plane mirrors out of the plurality of plane mirrors is located such that their reflection surfaces are parallel to each other. This configuration enables the imaging device 10 to obtain optical information wider than the direct viewing angle on both sides with the optical axis ox as the center.

In the imaging device 10 of the first embodiment, each plane mirror is in close contact with an outer edge of the imaging region ra of the imaging element 12 in the normal direction of the plane mirror. In this normal direction, if a gap is present between the plane mirror and the imaging region ra of the imaging element 12, the optical information on the subject forming an image in this gap would be lost. Considering such a situation, the imaging device 10 is configured as described above so as to avoid loss of optical information.

In the imaging device 10 of the first embodiment, each mirror is located outside the exit pupil of the imaging optical system 11 when viewed in the optical axis ox direction. This configuration enables the imaging device 10 to cause light beams passing near end portions of the exit pupil to be incident on the mirrors. Thus, the imaging device 10 is capable of mitigating the decrease in the amount of light caused by partial vignetting of light beams passing near the exit pupil.

In the imaging device 10 of the first embodiment, the angle of the principal ray of any light beam passing through the imaging optical system 11 with respect to the optical axis ox is larger than 0°. With the configuration described above, since the imaging optical system 11 is not image-space telecentric in the imaging device 10, light beams from object points at angles wider than the direct viewing angle can be incident on the optical elements 13. Thus, the imaging device 10 is capable of reliably generating optical information in a range wider than the direct viewing angle.

An imaging device according to a second embodiment of the present disclosure will be described below. The second embodiment differs from the first embodiment in the configuration of the optical element and the separation processing performed by the controller. The second embodiment will be described below with a focus on differences from the first embodiment. Note that the portions having the same configurations as in the first embodiment are denoted by the same symbols.

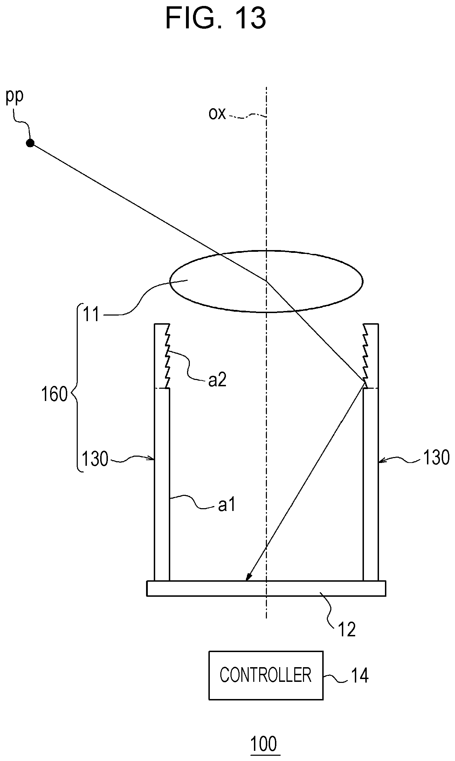

As illustrated in FIG. 13, an imaging device 100 including an optical device 160 according to the second embodiment, similar to the first embodiment, includes the optical device 160, an imaging element 12, and a controller 14. The structure and function of the imaging element 12 in the second embodiment are the same as those in the first embodiment. The structure of the controller 14 in the second embodiment is the same as that in the first embodiment. The optical device 160, similar to the first embodiment, includes an imaging optical system 11 and optical elements 130. The structure and function of the imaging optical system 11 in the second embodiment are the same as those in the first embodiment.

In the second embodiment, the optical elements 130 guide the second light incident on the imaging optical system 11 to the image formation region ia, in a similar way to the first embodiment. In the second embodiment, each optical element 130, similar to the first embodiment, includes multiple regions a1 and a2 aligned in the optical axis direction of the imaging optical system 11 in the imaging device 10. In the second embodiment, unlike the first embodiment, the optical elements 130 enable the second light incident on the regions a2 on the object side, out of the multiple regions a1 and a2, to reach the image formation region ia without the intervention of the regions a1 located closer to the image side than the regions a2, as described later.

In the second embodiment, the optical elements 130, similar to the first embodiment, may be mirrors configured to reflect at least part of the second light incident on the imaging optical system 11 to guide it to the image formation region ia. In the second embodiment, the reflection surface of each mirror may be parallel to one side of a rectangular imaging region ra, in a similar way to the first embodiment. In the second embodiment, the reflection surface of the mirror in the first region a1 of each optical element 130 also may be parallel to the optical axis ox of the imaging optical system 11.

In the second embodiment, the reflection surface of the mirror in the second region a2 of each optical element 130 may be inclined relative to the optical axis ox, unlike the first embodiment. The reflection surface of the mirror in each second region a2 may be inclined so as to face the imaging element 12 side. The reflection surface of the mirror in each second region a2 may be inclined such that the second light incident on the second region a2 can be incident on the inside of the image formation region ia. The mirror in each second region a2 can be divided into segments in the optical axis ox direction. The segments of the divided mirror in each second region a2 may be planes parallel to one another. The segments of the divided mirror in the second region a2 may be aligned in the optical axis ox direction.

In the second embodiment with the configuration described above, the direct image components imd corresponding to the object points within the direct viewing angle, in other words, the object points that emit first light, reach the image formation region ia without the intervention of the optical elements 13, in the same way as in the first embodiment. In the second embodiment, indirect image components imi corresponding to object points outside the direct viewing angle, in other words, object points that emit second light, reach the image formation region ia, being inverted once by the intervention of the optical elements 13, in a similar way to the first embodiment. In the second embodiment, as for the optical elements 130, the second light incident on the second regions a2 located on the object side, out of the multiple regions, reflects on the second regions a2 and focuses and forms images in the image formation region ia without the intervention of the first regions a1 located closer to the image side than the second regions a2, unlike the first embodiment.

In the second embodiment, switching may be possible between the emission and non-emission of the second light traveling toward at least the second regions a2 located closest to the object side, in a similar way to the first embodiment. For each of the multiple regions of the optical elements 130, switching may be possible between the emission and non-emission of the second light traveling toward the region.

In the second embodiment, whether the imaging device 10 has a configuration without switching elements or a configuration with switching elements, the controller 14 may control the imaging element 12 such that the imaging element 12 captures the composite image olim including all of the direct image components imd and indirect image components imi which overlap one another, in the same way as in the first embodiment.

In the second embodiment, in a configuration in which the imaging device 10 includes switching elements, the controller 14, unlike the first embodiment, may control the switching elements and the imaging element 12 such that they perform image capturing while changing specified regions sequentially so that the specified regions are switched to the emission state and the regions other than the specified regions are switched to the non-emission state. In the second embodiment, in a configuration in which the imaging device 10 includes switching elements, the controller 14 may control the switching elements and the imaging element 12 such that they perform image capturing in a state in which all of the regions are switched to the non-emission state, in the same way as in the first embodiment.

For example, in the second embodiment, to capture an image for one frame, the controller 14 may control the switching elements and the imaging element 12 such that they perform sequentially image capturing only for the direct image components imd, image capturing for the composite image of the direct image components imd and the first image components im1, and image capturing for the composite image of the direct image components imd and the second image components im2, in a similar way to the first embodiment.

In the second embodiment, the controller 14 may perform image processing to separate the composite image olim corresponding to the image signal into first image components im1 and second image components im2, in a similar way to the first embodiment. The controller 14 may combine the direct image components imd and the indirect image components imi obtained by the separation to generate a restored image rcim.

In the second embodiment, when performing image capturing while changing specified regions sequentially so that the specified regions are switched to the emission state and the regions other than the specified regions are switched to the non-emission state, in a similar way to the first embodiment, the controller 14 may generate a restored image rcim by a method different from the one mentioned above. For example, in a configuration in which the multiple regions are composed of the first regions a1 and the second regions a2, the controller 14 generates the first image components im1 by subtracting the direct image components imd from the composite image of the direct image components imd and the first image components im1. The controller 14 generates the second image components im2 by subtracting the direct image components imd from the composite image of the direct image components imd and the second image components im2. The controller 14 may generate a restored image rcim by combining the direct image components imd and the indirect image components imi obtained by the separation.

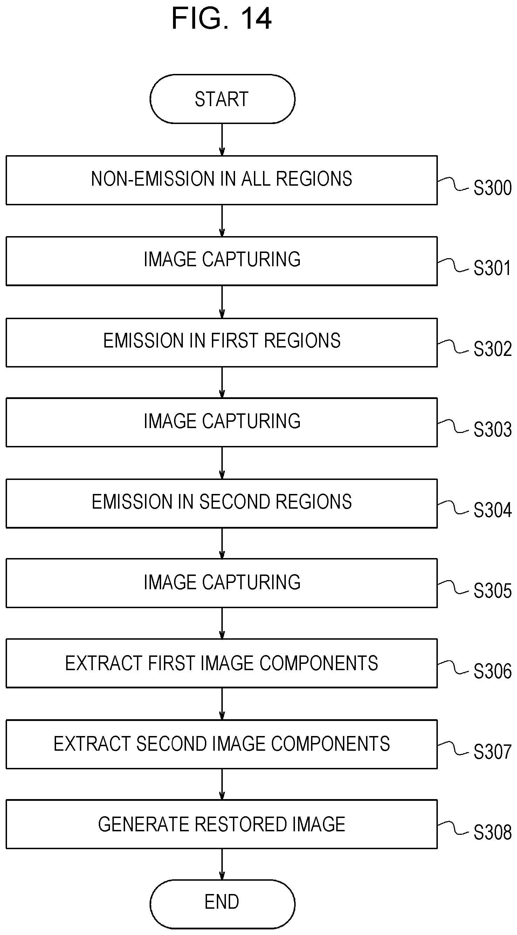

A second imaging process executed by the controller 14 in the second embodiment will be described below with reference to the flowchart in FIG. 14. The second imaging process is performed by the imaging device 100 including switching elements to generate an image for one frame by switching the non-emission state for the multiple regions and, for example, starts periodically, in a similar way to the first embodiment.

In step S300, the controller 14 controls the switching elements such that all of the regions of the optical elements 130 are in the non-emission state. After the control, the process proceeds to step S301.

In step S301, the controller 14 causes the imaging element 12 to capture an image. After the image capturing, the process proceeds to step S302.

In step S302, the controller 14 controls the switching elements such that the first regions a1 of the optical elements 130 are in the emission state. After the control, the process proceeds to step S303.

In step S303, the controller 14 causes the imaging element 12 to capture an image. After the image capturing, the process proceeds to step S304.

In step S304, the controller 14 controls the switching elements such that the second regions a2 of the optical elements 13 are in the emission state. After the control, the process proceeds to step S305.

In step S305, the controller 14 causes the imaging element 12 to capture an image. After the image capturing, the process proceeds to step S306.

In step S306, the controller 14 extracts the first image components im1 by subtracting the image captured in step S301 from the image captured in step S303. After the extraction, the process proceeds to step S307.

In step S307, the controller 14 extracts the second image components im2 by subtracting the image captured in step S301 from the image captured in step S305. After the extraction, the process proceeds to step S308.

In step S308, the controller 14 generates the restored image rcim by using the direct image components imd which compose the image captured in step S301, the first image components im1 extracted in step S306, and the second image components im2 extracted in step S307. The controller 14 also stores the restored image rcim into memory provided in the imaging device 10. After storing the image, the second imaging process ends.

The optical device 160 of the second embodiment with the configuration described above also includes the imaging optical system 11 that focuses the first light and forms an image in the image formation region ia, and the optical elements 130 including the multiple regions a1 and a2 aligned in the optical axis ox direction of the imaging optical system 11 and configured to guide the second light whose principal ray is incident on the imaging optical system 11 at a different angle with respect to the optical axis ox of the imaging optical system 11 from that of the first light, to the image formation region ia by way of the multiple regions a1 and a2. The optical elements 130 guide the second light incident on each of the multiple regions a1 and a2 to the same position in the image formation region ia. Thus, the optical device 160 also is capable of generating enlarged optical information in a wide range.

In the optical device 160 of the second embodiment, the second light incident on the regions a2 on the object side, out of the multiple regions a1 and a2, reaches the image formation region ia without the intervention of the regions a1 located closer to the image side than the regions a2. In the optical device 160 with the configuration described above, multiple optical elements 130 can be unnecessary to guide the second light incident on the regions a2 on the object side to the image formation region ia. Thus, the optical device 160 can reduce the effects of stray light caused by the use of the optical elements 130 facing each other.

Also in the optical device 160 of the second embodiment, switching is possible between emission and non-emission of the second light traveling toward at least the regions a2 located closest to the object side, out of the multiple regions a1 and a2. Thus, the optical device 160 also is capable of extracting the image components im2 corresponding to the regions a2 with high accuracy.

Also in the optical device 160 of the second embodiment, for each region of the multiple regions a1 and a2, switching is possible between the emission and non-emission of the second light traveling toward each region a1 or a2. Hence, the optical device 160 also is capable of extracting image components with high extraction accuracy. In particular, since the optical elements 130 include the second regions a2 with the configuration mentioned above in the second embodiment, the optical device 160 is capable of capturing the composite image of the direct image components imd and the indirect image components imi corresponding to specified regions. Thus, the optical device 160 is capable of extracting the image components corresponding to the specified regions with higher accuracy.

Also in the imaging device 100 of the second embodiment, the optical elements 13 are mirrors configured to reflect at least part of the light beams incident on the imaging optical system 11 and focus them and form images in the imaging region ra, and the reflection surface of each mirror is parallel to the optical axis ox and one side of the rectangular imaging region ra of the imaging element 12. Thus, the imaging device 100 also can provide an improved reproducibility of the reflected light components.

Also in the imaging device 100 of the second embodiment, the mirrors include a plurality of plane mirrors, and at least one set of two plane mirrors out of the plurality of plane mirrors is located such that their reflection surfaces are parallel to each other. Hence, the imaging device 100 also is capable of obtaining optical information wider than the direct viewing angle on both sides with the optical axis ox as the center.

Also in the imaging device 100 of the second embodiment, each plane mirror is in close contact with an outer edge of the imaging region ra of the imaging element 12 in the normal direction of the plane mirror. Thus, the imaging device 100 also can avoid the loss of optical information.

Also in the imaging device 100 of the second embodiment, each mirror is located outside the exit pupil of the imaging optical system 11 when viewed in the optical axis ox direction. Thus, the imaging device 100 is capable of mitigating the decrease in the amount of light caused by partial vignetting of light beams passing near the exit pupil.

Also in the imaging device 100 of the second embodiment, the angle of the principal ray of any light beam passing through the imaging optical system 11 with respect to the optical axis ox is larger than 0°. Thus, the imaging device 100 also is capable of reliably generating optical information in a range wider than the direct viewing angle.

In an embodiment, (1) an optical device includes:
an optical system configured to focus incident first light and form an image; and
an optical element including multiple regions that are aligned in a direction parallel to an optical axis of the optical system and include a region on an object side and a region on an image side located closer to the image side than the region on the object side, the optical element being configured to guide second light whose principal ray is incident on the optical system at a different angle with respect to the optical axis of the optical system from an angle of a principal ray of the first light, to an image formation region of the first light by way of the multiple regions, and
an image formation region of the second light coming by way of the region on the object side and an image formation region of the second light coming by way of the region on the image side overlap each other.
(2) In the optical device according to (1) mentioned above,
the second light incident on the region on the object side, out of the multiple regions, reaches the image formation region of the first light by way of a region located closer to the image side than the region on the object side.
(3) In the optical device according to (1) mentioned above,
the second light incident on the region on the object side, out of the multiple regions, reaches the image formation region of the first light without intervention of a region located closer to the image side than the region on the object side.
(4) In the optical device according to any one of (1) to (3) mentioned above,
in at least one region located closest to the object side, out of the multiple regions, switching is possible between emission and non-emission, from the at least one region, of the second light traveling toward the at least one region.
(5) In the optical device according to any one of (1) to (4) mentioned above,
for each region of the multiple regions, switching is possible between emission and non-emission, from each region, of the second light traveling toward each region itself.
(6) In the optical device according to any one of (1) to (5) mentioned above,
the optical element is a mirror configured to reflect at least part of the second light incident on the optical system and guide the reflected second light to the image formation region of the first light.
(7) An imaging device includes:
   the optical device according to any one of (1) to (6) mentioned above;
   an imaging element having an imaging region overlapping the image formation region of the first light; and
   a controller configured to separate an image corresponding to an image signal generated by image capturing of the imaging element into direct image components corresponding to object points in a direct viewing angle of the optical system, corresponding to the imaging region, and indirect image components corresponding to object points outside the direct viewing angle.
(8) In the imaging device includes according to (7),
the indirect image components include multiple sets of image components each set corresponding to a different one of the multiple regions, and
object points corresponding to each of the multiple sets of image components correspond to a region on which the second light is directly incident after passing through the optical system.

Although the embodiments of the optical devices 16 and 160 and the imaging devices 10 and 100 have been described above, the embodiments of the present disclosure may have implementation aspects not only as a method or a program for implementing the device but also as a storage medium on which the program is stored (examples include an optical disk, a magneto-optical disk, a CD-ROM, a CD-R, a CD-RW, a magnetic tape, a hard disk drive, and a memory card).

The implementation aspect of the program is not limited to an application program such as object code compiled with a compiler or program code executed by an interpreter, and the implementation aspect may also be in the form of a program module or the like to be embedded into an operating system. The program need not be configured such that all the processes are executed only by a CPU on a control substrate. The program may be configured as necessary such that part or all of the program is executed by an expansion board added to a substrate or another processing unit mounted on an expansion unit.

The figures used for explaining the embodiments according to the present disclosure are schematic. The ratios of dimensions or the like on the drawings are not necessarily consistent with those of actual ones.

Although the drawings and the examples are used above to describe the embodiments according to the present disclosure, it is important to note that those skilled in the art can make various variations and changes on the basis of the present disclosure. Hence, it is important to note that these variations and changes will be included in the scope of the present disclosure. For example, the functions and the like included in each component or the like can be rearranged unless doing so causes a logical contradiction. Two or more components or the like can be combined into one, or a component can be divided.

All of the configuration requirements described in the present disclosure and/or all the disclosed methods or all the processing steps can be combined in any way, excluding combinations in which the features of these are mutually exclusive. Each of the features described in the present disclosure can be substituted with an alternative feature that operates for the same purpose, an equivalent purpose, or a similar purpose unless explicitly denied. Hence, unless explicitly denied, each of the disclosed features is merely an example of a comprehensive series of identical or equivalent features.

Furthermore, the embodiments according to the present disclosure are not limited to any specific configuration of the embodiments described above. The embodiments according to the present disclosure can be expanded to all the new features described in the present disclosure or the combinations of some of those, or all the described new methods, processing steps, or the combinations of some of those.

The terms "first", "second", and the like used in the present disclosure are identifiers to distinguish components. For the components distinguished by being prefixed with "first", "second", and the like in the present disclosure, the ordinal numbers of the components can be exchanged. For example, as for the first image components and the second image components, "first" and "second", which are identifiers, can be exchanged with each other. The identifiers are exchanged at the same time. Also after exchanging the identifiers, these components are distinguished. Identifiers may also be eliminated. The components without identifiers are distinguished by symbols. Only on the basis of identifiers such as "first" and "second" mentioned in the present disclosure, the order of the components cannot be interpreted, or the identifiers cannot be used as a basis for the presence of an identifier with a smaller number.

### REFERENCE SIGNS

10, 100 imaging device
11 imaging optical system
12 imaging element
13, 130 optical element
14 shutter
15 controller
16, 160 optical device
a1, a2 first region, second region
CRA the angle between the optical axis and the principal ray, determined by the imaging optical system, of a light beam emitted from an object point at the angle 3/2 times the direct viewing angle from the optical axis
ia image formation region
imd direct image component
imi indirect image component
im1 first image component
im2 second image component
olim composite image
ox optical axis
pp an object point in a direction inclined at the angle 3/2 times the direct viewing angle with respect the optical axis
ra imaging region
rcim restored image

## Claims

1. An optical device comprising:
an optical system configured to focus incident first light and form an image; and
an optical element including multiple regions that are aligned in a direction parallel to an optical axis of the optical system and comprise a region on an object side and a region on an image side located closer to the image side than the region on the object side, the optical element being configured to guide second light whose principal ray is incident on the optical system at a different angle with respect to the optical axis of the optical system from an angle of a principal ray of the first light, to an image formation region of the first light by way of the multiple regions, wherein
an image formation region of the second light coming by way of the region on the object side and an image formation region of the second light coming by way of the region on the image side overlap each other.

2. The optical device according to claim 1, wherein
the second light incident on the region on the object side, out of the multiple regions, reaches the image formation region of the first light by way of a region located closer to the image side than the region on the object side.

3. The optical device according to claim 1, wherein
the second light incident on the region on the object side, out of the multiple regions, reaches the image formation region of the first light without intervention of a region located closer to the image side than the region on the object side.

4. The optical device according to any one of claims 1 to 3, wherein
in at least one region located closest to the object side, out of the multiple regions, switching is possible between emission and non-emission, from the at least one region, of the second light traveling toward the at least one region.

5. The optical device according to any one of claims 1 to 4, wherein
for each region of the multiple regions, switching is possible between emission and non-emission, from each region, of the second light traveling toward each region itself.

6. The optical device according to any one of claims 1 to 5, wherein
the optical element is a mirror configured to reflect at least part of the second light incident on the optical system and guide the reflected second light to the image formation region of the first light.

7. An imaging device comprising:
the optical device according to any one of claims 1 to 6;
an imaging element having an imaging region overlapping the image formation region of the first light; and
a controller configured to separate an image corresponding to an image signal generated by image capturing of the imaging element into direct image components corresponding to object points in a direct viewing angle of the optical system, corresponding to the imaging region, and indirect image components corresponding to object points outside the direct viewing angle.

8. The imaging device according to claim 7, wherein
the indirect image components include multiple sets of image components each set corresponding to a different one of the multiple regions, and
object points corresponding to each of the multiple sets of image components correspond to a region on which the second light is directly incident after passing through the optical system.
